# EUROPEAN PATENT APPLICATION

(11) **EP 1 691 563 A1**
(43) Date of publication of application: **16.08.2006**
(21) Application number: 05749646.5
(22) Date of filing: 31.05.2005
(51) Int. Cl.: H04Q 7/20, H04M 3/533

(54) **METHOD AND SYSTEM FOR GUARANTEEING THE ARRIVAL OF VOICE MESSAGE**

(30) Priority: 29.09.2004 CN 200410080601
(71) Applicant: Huawei Technologies Co., Ltd., Longgang District, Shenzhen, Guangdong 518129 (CN)
(72) Inventor: WANG, Shengqiong, Shenzhen, Guangdong 518129 (CN)
(74) Representative: Skuhra, Udo
(86) International application number: PCT/CN2005/000758
(87) International publication number: WO 2006/034617

(57) **Abstract**

A method for ensuring arrival of voice information is disclosed, comprising: when a calling terminal cannot successfully call a called terminal, a calling switching device connecting the voice channel of the calling terminal to a voice platform set in the communications network, the voice platform saving the voice information left by the calling terminal's user, continuing calling the called terminal until the called terminal gives an answer, and playing the voice information to the called terminal's user. Also disclosed is a system for ensuring the arrival of voice information corresponding to the aforementioned method.

## Description

### Field of the Invention

The present invention relates to the field of communications, and more particularly, to a method and a system for ensuring arrival of voice information.

### Background of the Invention

Along with the development of communications, especially the increasing application of mobile communications, transmission of messages is becoming more and more convenient and fast. In the procedure of communications, however, when a caller is calling a callee, if the called terminal which is used by the callee has turned off, or is not in the service area, or there is a failure in the communications network where the callee is currently located, the calling terminal which is used by the caller will not be able to put through the call to the called terminal, and the information that the caller desires to transfer cannot be transmitted to the callee in time.

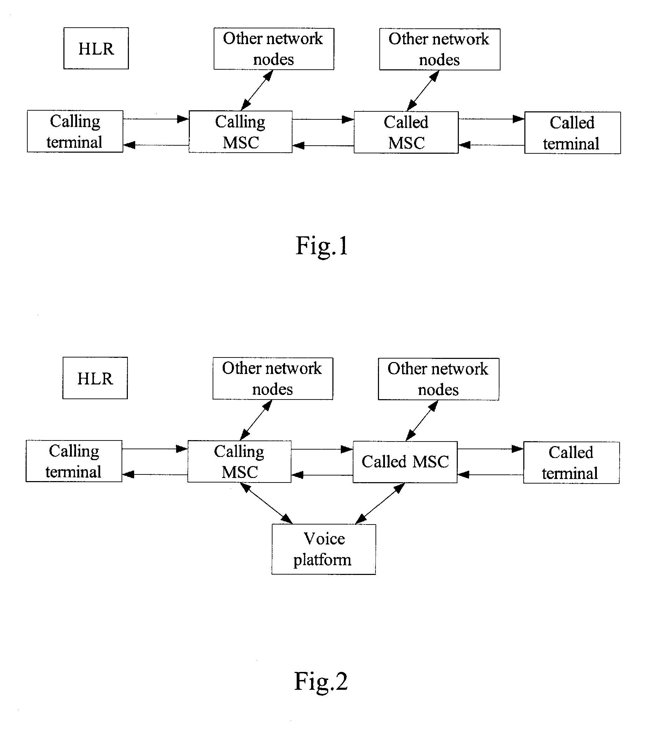

Figure 1 schematically illustrates the networking of a mobile communications network in prior art. As shown in Figure 1, the calling terminal sends a call to a called terminal via the calling Mobile Switching Center (MSC) where the caller is currently located. The calling MSC connects the call to the called MSC where the callee is currently located based on the identity of the called terminal. The called MSC puts through the call to the called terminal based on the identity thereof. If the called terminal gives an answer, it means that the current call has been successfully connected and the calling terminal and the called terminal can talk to each other. However, if there is a failure in the called MSC, or the called terminal gives no answer or is out of the service area, the current call cannot be put through successfully, making it impossible to timely transfer the information that the caller desires to transfer to the callee.

The calling MSC is connected with other network nodes, and the called MSC is connected with other network nodes also, where other network nodes may include MSCs, switching devices of a fixed phone network, Home Location Registers (HLR) in which users' subscription information is saved, and etc. And the other network nodes connected with the calling MSC and the other network nodes connected with the called MSC may comprise one or more identical network nodes.

When the calling terminal fails to make a call to the called terminal successfully, the called MSC may connect the voice channel of the calling terminal directly to a secretary station. The secretary station prompts the caller to leave a piece of voice information, saves the voice information the caller has left, and then triggers a Short Message Service Center (SMSC) to send a short message to the called terminal so as to notify the callee that the callee should listen to the voice information on the secretary station. The communications network can only notify the callee to listen to the voice information left on the secretary station by means of a text short message. And it is up to the callee to choose whether to listen to the voice information. If the callee chooses to listen to the voice information the caller has left, the user has to call the secretary station first and cannot listen to the voice information until the call is put through. In addition, as a simple text short message is unable to clearly express the information that the caller desires to transfer, it is possible that the callee would choose not to listen to the voice information, which makes the information the caller desires to transfer unable to be passed to the callee in time.

Alternatively, when the calling terminal cannot successfully call the called terminal, the called MSC may put through the voice channel of the calling terminal directly to a voice mail platform. After that, the voice mail platform prompts the caller to leave a piece of voice information and saves the voice information the caller has left. Then, the voice platform converts the voice information left by the caller into a voice short message and sends the voice short message to the called terminal. By using a voice short message to notify the callee of the information that the caller desires to transfer, it is possible to transfer the information that the caller wants to send to the callee in time. However, for the reason that the information that can be included in a single voice short message is limited, the information carried in a single voice short message that the caller desires to transfer is constrained, that is, a single voice short message may not be able to carry so much information as the caller desires. To send as much information as the caller wants, one piece of voice information the caller has left may be divided into several pieces of voice information and carried in multiple voice short messages respectively. But in this case, the contents of the voice information are usually incoherent, which makes the callee less satisfied with the service.

### Summary

In view of the above, one objective of this invention is to provide a method for ensuring arrival of voice information, and another objective of the invention is to provide a system for ensuring arrival of voice information, so that the information that the caller desires to transfer could be transferred timely and completely to the callee.

To achieve the above objectives, this invention provides a method for ensuring the arrival of voice information, wherein the method is implemented in a communications network including a calling terminal, a calling switching device, and a called terminal, and comprises:
when the calling terminal cannot successfully call the called terminal, the calling switching device connecting the voice channel of the calling terminal to a voice platform set in the communications network, and the voice platform saving a piece of voice information left for the user of the called terminal by the calling terminal's user; the voice platform continuing initiating a call to the called terminal until the called terminal gives an answer, and the voice platform playing the voice information to the user of the called terminal.

Before the step of the voice platform continuing initiating a call to the called terminal, the method may further comprise: a user information storage set in the communications network notifying the voice platform that the called terminal is reachable.

In the above solution, the step of a user information storage notifying the voice platform that the called terminal is reachable may comprise: after determining that the state of the called terminal has changed, the user information storage notifying the voice platform that the called user terminal is reachable.

In the above solution, the step of a user information storage notifying the voice platform that the called terminal is reachable may further comprise: the user information storage providing the voice platform with the address information of the switching device where the called terminal is currently located, and the step of the voice platform initiating a call to the called terminal may comprise: according to the address information of the switching device provided by the user information storage, the voice platform initiating a call to the called terminal via the switching device where the called terminal is currently located.

In the above solution, the method may further comprise: a home switching device being configured for the voice platform; and the step of the voice platform initiating a call to the called terminal may comprise: the voice platform initiating a call to the switching device where the called terminal is currently located via the configured home switching device, and the switching device where the called terminal is currently located then initiating a call to the called terminal.

After the step of the voice platform playing the voice information to the user of the called terminal, the method may further comprise: the voice platform deleting the voice information left for the user of the called terminal.

In the above solution, the step of the voice platform continuing initiating a call to the called terminal until the called terminal gives an answer may comprise: before the called terminal gives an answer, the voice platform initiating a call to the called terminal every preset period of time.

The invention also provides a system for ensuring the arrival of voice information, comprising: a switching device for processing calls and a user information storage for saving the subscription information of users, wherein the system further comprises: a voice platform connected with the switching device and the user information storage respectively which is for connecting the voice channel of a calling terminal when the calling terminal cannot successfully call the called terminal, saving the voice information left for the user of the called terminal by the calling terminal's user, and initiating calls to the called terminal so as to play the saved voice information.

In the above system, the user information storage may be a home location register, or a home subscriber server.

In the above system, the voice platform may further comprise a service control point connected with the switching device and the user information storage respectively which is for initiating calls to the called terminal.

In accordance with the solution put forward by this invention, a voice platform is configured in the communications network, when the calling terminal cannot successfully call the called terminal, the calling switching device puts through the voice channel of the calling terminal to the voice platform, and the voice platform prompts the user of the calling terminal to leave a piece of voice information and saves the voice information the caller has left; when the called terminal is reachable, the voice platform initiates a call to the called terminal until the callee answers the call, and then, the voice platform plays the voice information left by the caller to the called terminal. So that, the solution of this invention is able to ensure the timely and complete arrival of the information that the caller desires to transfer to the callee, and improve the capability of the caller in transferring the information. Meanwhile, the callee can acquire the voice information left by the caller conveniently without initiating a call to the communications network on its own initiative, and the voice information heard by the callee is as coherent and complete as directly talking to the caller over the phone, which makes the callee more satisfied with the service.

### Brief Description of the Drawings

Figure 1 schematically illustrates the networking of a mobile communications network in prior art;
Figure 2 schematically illustrates the networking of a mobile communications network in accordance with this invention.

### Detailed Description of Preferred Embodiments

This invention is hereinafter described in detail with reference to the accompanying drawings.

In accordance with this invention, a voice platform is set in the communications network, and when the calling terminal cannot call the called terminal successfully, the calling switching device connects the voice channel of the calling terminal to the voice platform which prompts the caller to leave a piece of voice information and saves the voice information left by the caller after then. After that, the voice platform continues initiating a call to the called terminal when the called terminal is reachable until the called terminal answers the call. And the voice platform plays the voice information left by the caller, thereby ensuring that the information the caller desires to transfer to the callee be transferred timely and completely. There are various cases in which the calling terminal cannot call the called terminal successfully, e.g., the called terminal has switched off or is not in the service area, or there is a failure in the communications network where the called terminal is located. Wherein, the called terminal being reachable usually means that the called terminal can receive an initiated call to itself, e.g., the called terminal has switched on and is in the service area, and etc. The implementation of this invention is hereinafter described in detail by taking its use in a mobile communications network as an example.

Figure 2 schematically illustrates the networking of a mobile communications network in accordance with this invention. As shown in Figure 2, a voice platform is set in the communications network, and the voice platform is connected with an MSC and a home information storage respectively. And it is configured with routing information of both the routes from the MSC to the voice platform and the routes from the voice platform to the MSC, wherein the home information storage may be a network device for saving the subscription information of users, such as an HLR or home subscriber server (HSS). The calling terminal initiates a call to the called terminal via the calling MSC where the calling terminal is currently located. When the calling MSC cannot connect to the called terminal successfully, the calling MSC switches the voice channel of the calling terminal to the voice platform which prompts the caller to leave a piece of voice information and saves the voice information left by the caller after that. The calling MSC may provide the voice platform with an identity of the called terminal so that the voice platform could associate the voice information with the called terminal by using the called terminal's identity.

When the called terminal is reachable, the voice platform continues initiating a call to the called terminal until the called terminal answers the call. And then, the voice platform plays the voice information left by the caller to the callee. If the called terminal refuses to listen to the voice information or no answer is given to the call, the voice platform will initiate a call every preset period of time until the called terminal gives an answer.

The voice platform can learn that the called terminal is reachable from the home information storage. For example, after the voice platform saves a new piece of voice information corresponding to a called terminal, the voice platform may request the home information storage to send a notice to the voice platform when the state of the called terminal has changed. In this way, if the called terminal's the state has changed, the home information storage may notify the voice platform that the called terminal is reachable, and may further provide the voice platform with the address information of the MSC where the called terminal is currently located.

The procedure of the voice platform initiating a call to the called terminal may be the same as the procedure of a typical calling terminal initiating a call to the called terminal. The procedure may comprise: configuring a home MSC for the voice platform, and all the calls initiated by the voice platform passing this MSC. That is, the voice platform initiates a call to the called terminal via this MSC, and then, the MSC puts through the call to the called MSC where the called terminal is currently located based on the identity of the called terminal provided by the voice platform. Wherein, the address information of the called MSC may be obtained through the interaction between the home MSC of the voice platform and the HLR, and the called MSC may put through the call to the called terminal according to the identity thereof. Alternatively, when the home information storage notifies the voice platform that the called terminal is reachable, the home information storage may further provide the voice platform with the information of the called MSC where the called terminal is currently located, and the voice platform may directly initiate a call to the called terminal via the MSC, or via the home MSC of the voice platform and the called MSC.

The voice platform may comprise a Service Control Point (SCP). In this case, when the state of the called terminal has changed, the home information storage may notify the SCP included in the voice platform that the called terminal is reachable. And a call to the called terminal may be initiated by the SCP then.

After playing the voice information to the callee, the voice platform may delete the voice information corresponding to the callee.

In case that there are different communications network systems co-existing, the voice platform may connect with each switching device of these communications network respectively, e.g., the voice platform connects respectively with an MSC and a switching device of a fixed telephone network.

To sum up, the foregoing is only a preferred embodiment of this invention and is not for use in limiting the protection scope thereof.

## Claims

1. A method for ensuring arrival of voice information, wherein the method is implemented in a communications network comprising a calling terminal, a calling switching device, and a called terminal, further comprising:
when the calling terminal fails to call the called terminal connecting the voice channel of the calling terminal to a voice platform set in the communications network by the calling switching device, and saving by the voice platform a piece of voice information left for the user of the called terminal by the calling terminal's user;
continuing initiating a call to the called terminal until the called terminal gives an answer, and playing the voice information to the user of the called terminal by the voice platform.

2. The method according to Claim 1, before the step of continuing initiating a call to the called terminal by the voice platform, further comprising:
notifying the voice platform that the called terminal is reachable by a user information storage set in the communications network.

3. The method according to Claim 2, wherein the step of notifying the voice platform that the called terminal is reachable by a user information storage comprises:
after determining that the state of the called terminal has changed, notifying the voice platform that the called user terminal is reachable by the user information storage.

4. The method according to Claim 2, wherein the step of notifying the voice platform that the called terminal is reachable by a user information storage further comprises: providing the voice platform with the address information of the switching device where the called terminal is currently located by the user information storage,
and the step of initiating a call to the called terminal by the voice platform comprises: according to the address information of the switching device provided by the user information storage, initiating by the voice platform a call to the called terminal via the switching device where the called terminal is currently located.

5. The method according to Claim 1, wherein the method further comprises: configuring a home switching device for the voice platform;
and the step of initiating a call to the called terminal by the voice platform comprises: initiating by the voice platform a call to the switching device where the called terminal is currently located via the configured home switching device, and then initiating a call to the called terminal by the switching device where the called terminal is currently located.

6. The method according to Claim 1, after the step of playing the voice information to the user of the called terminal by the voice platform, further comprising:
deleting the voice information left for the user of the called terminal by the voice platform.

7. The method according to Claim 1, wherein the step of continuing initiating a call to the called terminal until the called terminal gives an answer by the voice platform comprises: before the called terminal gives an answer, initiating a call to the called terminal every preset period of time by the voice platform.

8. A system for ensuring arrival of voice information, comprising:
a switching device for processing calls;
a user information storage for saving the subscription information of users; and
a voice platform connected with the switching device and the user information storage respectively, for connecting the voice channel of a calling terminal when the calling terminal fails to call the called terminal, saving the voice information left for the user of the called terminal by the calling terminal's user, and initiating calls to the called terminal so as to play the saved voice information.

9. The system according to Claim 8, wherein the user information storage is a home location register, or a home subscriber server.

10. The system according to Claim 8, wherein the voice platform further comprises a service control point connected with the switching device and the user information storage respectively, for initiating calls to the called terminal.
